# EUROPÄISCHE PATENTSCHRIFT

(11) **EP 0 344 295 B1**
(45) Veröffentlichungstag und Bekanntmachung des Hinweises auf die Patenterteilung: **16.03.1994**
(21) Anmeldenummer: 89901066.4
(22) Anmeldetag: 14.12.1988
(51) Int. Cl.: A01K 63/04, C02F 3/20

(54) **VERWENDUNG EINES VERFAHRENS ZUR BEHANDLUNG DES PROZESSWASSERS VON AQUAKULTURANLAGEN DURCH NITRIFIKATION UND SAUERSTOFFANREICHERUNG**
USE OF A PROCESS FOR TREATING THE WASTE WATER FROM AQUACULTURE INSTALLATIONS BY NITRIFICATION AND OXYGENATION
UTILISATION D'UN PROCEDE DE TRAITEMENT DE L'EAU UTILISEE DANS DES INSTALLATIONS D'AQUACULTURE PAR NITRIFICATION ET OXYGENATION

(30) Priorität: 16.12.1987 DE 3742642
(43) Veröffentlichungstag der Anmeldung: 06.12.1989
(73) Patentinhaber: Willi Johannes Stahlbau GmbH & Co KG, D-27386 Hemslingen (DE)
(72) Erfinder: BRÄUTIGAM, Hans-Jürgen, D-2100 Hamburg 90 (DE)
(74) Vertreter: Schmidt-Bogatzky, Jürgen, Dr. Ing. Huth, Dietrich & Partner
(86) Internationale Anmeldenummer: EP8801154
(87) Internationale Veröffentlichungsnummer: WO8905578

(56) Entgegenhaltungen:
- WO-A-87/00517
- WO-A-87/07475

## Beschreibung

Die Erfindung betrifft die Verwendung eines Verfahrens zur Behandlung des Prozeßwassers von Aquakulturanlagen bei dem Prozeßwasser durch einen Reaktor mit einem Trägermaterial für Mikroorganismen geleitet wird, wobei simultan eine biologische Nitrifikation und eine Sauerstoffanreicherung des Prozeßwassers erfolgt.

Bei Aquakulturanlagen wird zunehmend die Wasserkreislaufführung angewandt und bei hohen Besatzdichten gearbeitet. Konkurrenzfähige Produkte werden Jedoch nur erhalten, wenn die zusätzlichen Probleme der Ammonium-Anreicherung im Wasser und des erhöhten Sauerstoffbedarfs des Besatzes mit kostengünstigen Verfahrenstechniken gelöst werden können. Ein weiteres Problem ist häufig die wirtschaftliche Beseitigung von Stickstoff-Übersättigungen beim Frischwasser und die der Kohlendioxid-Übersättigung in den Becken bzw. im Kreislaufwasser.

Bei den derzeit als Problemlösung angebotenen Verfahren werden Nitrifikation, Sauerstoffanreicherung und evtl. die Beseitigung von Gasübersättigungen in voneinander getrennten, separaten Reaktoren durchgeführt.

In den Nitrifikationsreaktoren wird der fischtoxische Ammonium-Stickstoff durch Mikroorganismen (Nitrifikanten) unter Sauerstoffverbrauch in fischverträglichen Nitrat-Stickstoff umgewandelt. Zur Anwendung kommen fast ausschließlich Biofilmverfahren unter Verwendung von Tropfkörpern, Tauchtropfkörpern und dgl. bei denen die Nitrifikanten einen Biofilm auf dem festen Trägermaterial bilden. In vielen Fällen werden mehrere Einzelreaktoren hintereinander oder parallel geschaltet. Zur Sauerstoffversorgung wird neben Luft zunehmend technisch reiner Sauerstoff verwendet. Den Nitrifikationsreaktoren nachgeschaltet sind die Reaktoren, in denen das Wasser soweit mit Sauerstoff angereichert wird, daß der hohe Sauerstoffbedarf des Besatzes gedeckt werden kann. In diesen sog. Oxidatoren wird der Sauerstoffgehalt des Wassers ebenfalls mit technisch reinen Sauerstoff unter Druck auf Werte von ca. 20mg0₂/l bis auf ca. 40mg0₂/l angehoben.

Die übliche getrennte Durchführung von Nitrifikation und Sauerstoffanreicherung in unterschiedlichen Reaktoren erfordert relativ hohe Investitionen und bewirkt hohe Betriebskosten, die die Aquakulturanlage verteuern und damit die Vermarktungsmöglichkeiten der erzeugten Produkte einschränken.

Ein weiterer energieaufwendiger Aufbereitungsschritt in Aquakulturanlagen ist die Beseitigung der häufigen Stickstoffübersättigung im Frischwasser. Zur Reduzierung der Stickstoffkonzentration auf verträgliche Werte werden u. a. spezielle Strippreaktoren eingesetzt, in denen das Wasser im Kontakt mit Luft und über Materialien mit großer spezifischer Oberfläche verteilt wird. Bisweilen kommt es in den Becken auch zur Anreicherung von Kohlendioxid. Hierbei werden ähnliche Verfahren zur Gasentfernung angewandt wie bei Stickstoff.

Ein Verfahren der eingangs genannten Art ist durch die WO-A-8700517 bekannt. Dieses Verfahren soll zur reinigenden Behandlung von Wässern dienen, die mit unerwünschten organischen Inhaltsstoffen wie Ammonium, Nitrat- und Nitrat-Stickstoff bzw. gesundheitsschädlichen flüchtigen wie z. B. halogenierte Kohlenwasserstoffe, Ammoniak u. dgl. enthaltene Substanzen belastet sind. In einem Biofilmreaktor werden dem zu reinigenden Wasser Gase so zugesetzt, daß bei optimaler Reinigungswirkung keine Verstopfung des Reaktors oder Beeinträchtigung des Biobewuches auftritt. Ein Einsatz dieses Verfahrens bei Aquakulturanlagen ist nicht vorgesehen.

Die Aufgabe der Erfindung besteht darin, das eingangs genannte Verfahren so zu verbessern, daß es bei einer Verwendung bei der Behandlung des Prozeßwassers von Aquakulturanlagen möglich ist, bei Verringerung des apparativen und energietechnischen Aufwandes eine zuverlässige Behandlung des Prozeßwassers durch Nitrifikation, Sauerstoffanreicherung zur Sauerstoffversorgung des Besatzes sowie ggf. eine Stickstoff- bzw. Kohlendioxidreduzierung zu erzielen.

Erfindungsgemäß erfolgt die Lösung der Aufgabe durch Verwendung des bekannten Verfahrens derart, daß das Prozeßwasser mindestens einen Fließbettreaktor durchströmt, wobei vom Reaktoraustritt kein Prozeßwasser als Rezirkulationswasser zum Reaktoreintritt zurückgeführt wird, und daß dabei der Sauerstoff über Membranen in dem Fließbettreaktor in das Prozeßwasser eingetragen wird, wobei die Sauerstoffeintragungsleistung des Membransystems so eingestellt, wird, daß die angelieferte Sauerstoffmenge ausreicht um den Ammoniumstickstoff vollständig zu nitrifizieren und zusätzlich die Sauerstoffkonzentration im Reaktorablaufwasser auf den gewünschten Wert einzustellen. In einer Ausgestaltung der Erfindung wird durch Abzug eines Teilgasstroms aus dem Membransystem überflüssiger Stickstoff oder überschüssiges Kohlendioxid aus der Wasserphase entfernt.

Bei der gemeinsamen Durchführung von Nitrifikation und Sauerstoffanreicherung zur Sauerstoffversorgung des Besatzes in einem Reaktor dient ein Teil des in den Reaktor eingetragenen Sauerstoffs somit der Sauerstoffversorgung der Nitrifikanten zur Umwandlung des Ammonium-Stickstoffs in Nitrat-Stickstoff, der andere Teil erhöht die Sauerstoffkonzentration in der Wasserphase und dient somit der Sauerstoffversorgung des Besatzes in den nachgeschalteten Hälterungsbecken.

Verwendet man technisch reinen Sauerstoff und als Sauerstoffeintragungsverfahren den an sich bekannten Sauerstoffeintrag über verstärkte Siliconmembranen, können falls erforderlich, gleichzeitig noch überschüssiger Stickstoff bzw. Kohlendioxid aus der Wasserphase entfernt werden, wenn man kontinuierlich einen Teilgasstrom aus dem Membranbegasungssystem abzieht.

Bei der zusätzlichen Gasentfernung übernimmt ein Teil des Sauerstoffs die Funktion eines Trägergases, welches das unerwünschte Gas aus dem Gasraum des Membransystems entfernt, das aufgrund des vorliegenden Partialdurchgefälles zwischen wässriger und gasförmiger Phase durch die Membran in den Gasraum im Membransystem permeiert ist.

Vorteilhaft kann es bei der simultanen Nitrifikation und Sauerstoffanreicherung in einem Reaktor auch sein, das Reaktorzulaufwasser zusätzlich noch, immer, oder nur zeitweise bei Bedarf, mit Sauerstoff auf Werte z. B. über 8mg0₂/l anzureichern, wobei als Verfahren zur Sauerstoffanreicherung des Zulaufwassers des Nitrifikations-/Sauerstoffanreicherungsreaktors der blasenfreie Sauerstoffeintrag über Siliconmembranen zur Anwendung kommt. Auch bekannte Verfahren wie z. B. U-Rohr-Sauerstoffanreicherung, Sauerstoffanreicherung im Abstrom (Downflow bubble contact aeration) usw. können angewendet werden.

Die Anlage zur Durchführung des erfindungsgemäßen Verfahrens kann einen als Fließbettreaktor oder Festbettreaktor ausgebildeten Reaktor aufweisen, der im Frischwasserstrom, Zulaufwasserstrom oder Kreislaufwasserstrom angeordnet ist und in dessen Reaktorinnenraum der Sauerstoff über Membranen eingetragen wird. Die Erfindung wird nachstehend am Beispiel der in den Zeichnungen schematisch dargestellten Aquakulturanlagen näher erläutert. Es zeigt
- Fig. 1: eine Aquakulturanlage mit einem im Frischwasserzulauf angeordneten Reaktor,
- Fig. 2: eine Aquakulturanlage mit einem im Mischwasserzulauf angeordneten Reaktor,
- Fig. 3: eine Aquakulturanlage mit einem im Kreislaufwasserstrom angeordneten Reaktor,
- Fig. 4: ein Diagramm mit Versuchsergebnissen einer simultanen Nitrifikation und Sauerstoffanreicherung im Fließbett,
- Fig. 5 und 6: weitere Beispiele für die Anordnung von Reaktoren in schematischen Darstellungen.

Je nach den örtlichen Randbedingungen kann der Reaktor 4 zur Durchführung des erfindungsgemäßen Verfahrens in verschiedenen Strangabschnitten des Wasserführungssystems der Aquakulturanlage 1, 2, 3 eingesetzt werden, so daß das Verfahren im Frischwasserstrom 5, im aus Frischwasser und Kreislaufwasser gebildeten Zulaufwasserstrom 6 oder im Kreislaufwasserstrom 7 zur Hälterung 9 durchgeführt wird. Es ist auch möglich, bei einer herkömmlichen Anlagenkonfiguration mit getrennter Nitrifikation und Sauerstoffanreicherung zusätzlich einen Teilstrom vorzusehen, in dem ein Reaktor 4 zur Durchführung des Verfahrens angeordnet wird. Ferner können auch, sofern aus technischen Gründen erforderlich, mehrere Reaktoren zur Nitrifikation und Sauerstoffanreicherung in einer Aquakulturanlage hintereinander und/oder parallel geschaltet werden.

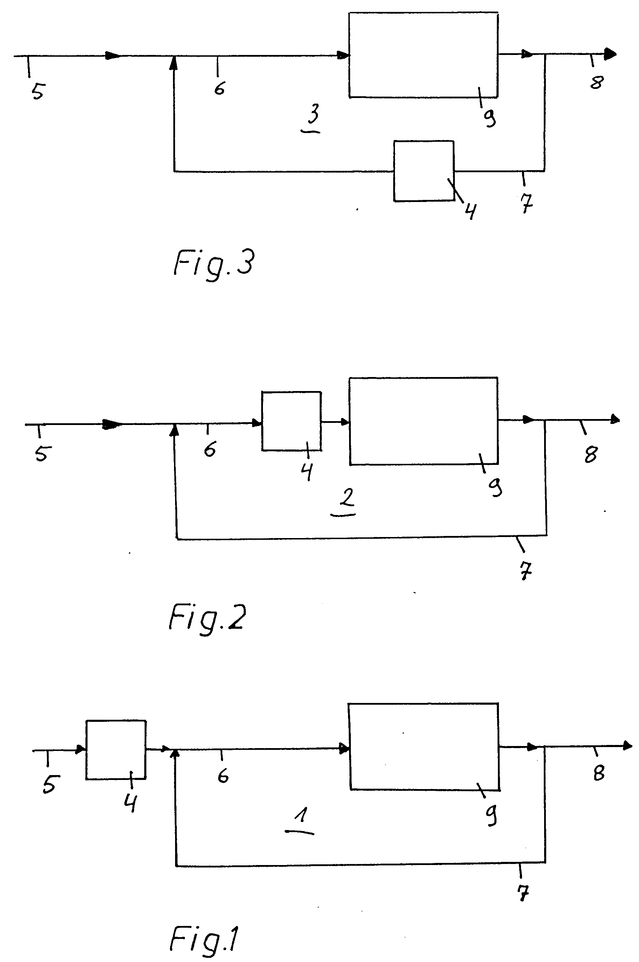

In Fig. 1 ist eine Aquakulturanlage 1 dargestellt, bei der der Reaktor 4 in dem den Frischwasserstrom 5 führenden Strangabschnitt angeordnet ist.

Die Nitrifikation, Sauerstoffanreicherung und Stickstoffentfernung in einem Reaktor wird vorteilhaft bei der Aufbereitung von Frischwasser in Aquakulturanlagen angewendet, das häufig mit gasförmigen Stickstoff übersättigt ist, wenig Sauerstoff enthält und bisweilen noch mit Ammoniumstickstoff verunreinigt ist. Selbstverständlich kann das Verfahren beim Frischwasser auch nur zum Zwecke der simultanen Stickstoffentfernung und Sauerstoffanreicherung eingesetzt werden, wenn das Frischwasser frei von Ammonium-Stickstoff ist. Ferner ist ein Strangabschnitt für einen Kreislaufwasserstrom 7 vorgesehen, durch den Abwasser vom Abwasserstrom 8 dem Frischwasserstrom 5 zugeführt wird. Das Mischwasser fließt als Zulaufwasserstrom 6 der Hälterung 9 zu. Der Anschluß des Kreislaufwasserstroms 7 an den Zulaufwasserstrom 6 ist zwischen der Hälterung 9 und dem Reaktor 4 angeordnet.

In begründeten Fällen kann auch die simultane Nitrifikation, Sauerstoffanreicherung und Stickstoffentfernung im Zulaufstrom 6 vorteilhaft sein. Eine derartige Aquakulturanlage 2 mit einem im Strangabschnitt des Zulaufwasserstroms 6 angeordneten Reaktor 4 ist in Fig. 2 gezeigt.

Bei Anwendung des erfindungsgemäßen Verfahrens in einem Reaktor 4 im Kreislaufwasserstrom 7 einer Aquakulturanlage 3 (Fig. 3) entfällt das Problem der Stickstoffübersättigung. Unter Umständen liegt jedoch eine zu hohe Kohlendioxid-Konzentration vor. In diesem Fall kann die Kohlendioxidkonzentration gleichzeitig mit der Nitrifikation und Sauerstoffanreicherung abgesenkt werden, indem -ähnlich wie im Falle der Stickstoffübersättigung- ein Teilstrom der Gasphase im Membransystem aus dem Reaktor 4 abgelassen wird.

Zur Durchführung der erfindungsgemäßen simultanen Nitrifikation und Sauerstoffanreicherung sowie ggf. der Stickstoff/Kohlendioxid-Entfernung in Aquakulturanlagen sind sowohl Reaktoren 4 geeignet, die total durchmischt sind als auch Reaktoren 4, die eine pfropfenähnliche Durchströmung aufweisen . Reaktoren 4 wie Festbett- und Fließbettreaktoren mit pfropfenähnlicher Durchströmung sind zu bevorzugen, da neben verfahrenstechnischen Vorteilen auch die Umsatzleistungen höher liegen. Fließbettreaktoren sind aufgrund ihrer sehr hohen volumetrischen Umsatzleistungen, der fehlenden Verstopfungsgefahr und der günstigen Verweilzeitverteilung, die der erwünschten idealen Propfenströmung sehr nahe kommt, für die Durchführung des erfindungsgem. Verfahrens besonders geeignet. Bei Anwendung von Fließbettreaktoren zur Durchführung des Verfahrens ist der bekannte direkte Sauerstoffeintrag in das Fließbett über Gasaustauscher aus verstärkten Siliconschläuchen entweder allein oder in Kombination mit einer externen Sauerstoffanreicherung des Reaktorkreislaufwassers oder des Reaktorzulaufwassers besonders vorteilhaft.

In anderen Reaktoren 4 können neben Schlauchmembranen auch Flachmembranen eingesetzt werden. Beide Membrantypen werden entsprechend der Ausbildung des Reaktors 4 der Aufgabenstellung zu unterschiedlichen Modulen angeordnet.

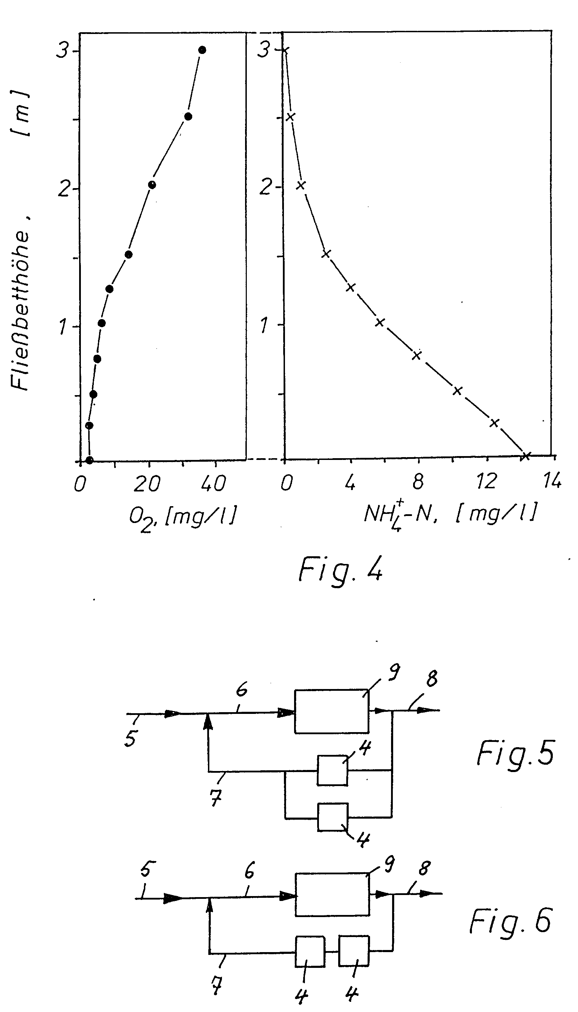

Bei Durchführung der erfindungsgemäßen simultanen Nitrifikation und Sauerstoffanreicherung in Fließ- und Festbettreaktoren wird ohne zusätzlichen Aufwand die Kinetik des Nitrifikationsprozesses verbessert, wodurch durch Steigerung der Reaktorumsatzleistung zusätzliche Einsparungen möglich sind. Zurückzuführen ist dies auf den für das Verfahren in diesen Reaktoren charakteristischen gegenläufigen Verlauf der Sauerstoff- und Ammoniumkonzentration in Fließrichtung. In Fig. 4 ist dieser Vorgang schematisch dargestellt, wobei der Verlauf der Sauerstoffkonzentration (O₂, mg/l) und der der Ammonium-Stickstoffkonzentration (NH₄-N, mg/l) in Fließrichtung (Fließbetthöhe m) im Fließbett gezeigt ist. Die Sauerstoffkonzentration, die im Gegensatz zur Ammoniumkonzentration in Fließrichtung ansteigt, führt zu einer teilweisen Kompensation der Abnahme der Nitrifikationsgeschwindigkeit, die beginnend bei den Werten um 5 mg NH₄-N/l mit kleineren Ammoniumkonzentrationen normalerweise stärker zurückgeht als dies bei dem Beispiel nach Fig. 4 der Fall ist.

Die Sauerstoffeintragungsleistung des Membransystems wird mit Hilfe des Sauerstoffpartialdrucks bzw. des Gesamtdrucks im Membransystem so eingestellt, daß die von der Membranoberfläche angelieferte Sauerstoffmenge ausreicht, um den Ammoniumstickstoff vollständig zu nitrifizieren und zusätzlich die Sauerstoffkonzentration im Reaktorablaufwasser auf den gewünschten Wert einzustellen. Als Meßgröße zur Regelung der Sauerstoffzufuhr wird die Sauerstoffkonzentration im Reaktorablaufwasser oder im Wasser der nachgeschalteten Hälterungsbecken verwendet.

Unter Umständen kann es auch zweckmäßig sein, die Sauerstoffkonzentration im Zulaufwasser des Reaktors zur simultanen Nitrifikation und Sauerstoffanreicherung zusätzlich noch auf Werte von über 8 mg/l anzuheben.

Bei der technischen Anwendung des beschriebenen Verfahrens können sofern erforderlich mehrere Reaktoren 4 zur simultanen Nitrifikation und Sauerstoffanreicherung hintereinander oder parallel geschaltet werden, wie es als Beispiel in Fig. 5 und 6 für den Kreislaufwasserstrom 7 dargestellt ist. Sofern es im Einzelfall anlagenbedingt erforderlich ist, können derartige Reihen- und Parallelschaltungen von Reaktoren 4 auch im Zulaufstrom 6 oder Frischwasserstrom 5 für sich allein oder in Ergänzung bestehender Reaktoren für Nitrifikation oder Sauerstoffanreicherung vorgesehen werden.

## Patentansprüche

1. Verwendung eines Verfahrens zur Behandlung des Prozeßwassers von Aquakulturanlagen, bei dem Prozeßwasser durch einen Reaktor mit einem Trägermaterial für Mikroorganismen geleitet wird, wobei simultan eine biologische Nitrifikation und eine Sauerstoffanreicherung des Prozeßwassers erfolgt, dadurch gekennzeichnet, daß das Prozeßwasser mindestens einen Fließbettreaktor durchströmt, wobei vom Reaktoraustritt kein Prozeßwasser als Rezirkulationswasser zum Reaktoreintritt zurückgeführt wird, und daß dabei der Sauerstoff über Membranen in dem Fließbettreaktor in das Prozeßwasser eingetragen wird, wobei die Sauerstoffeintragungsleistung des Membransystems so eingestellt wird, daß die angelieferte Sauerstoffmenge ausreicht um den Ammoniumstickstoff vollständig zu nitrifizieren und zusätzlich die Sauerstoffkonzentration im Reaktorablaufwasser auf den gewünschten Wert einzustellen.

2. Verwendung des Verfahrens nach Anspruch 1, dadurch gekennzeichnet, daß durch Abzug eines Teilgasstroms aus dem Membransystem überschüssiger Stickstoff oder überschüssiges Kohlendioxid aus der Wasserphase entfernt wird.

## Claims

1. Application of a process for treatment of process water of aquiculture plants by which the process water is conducted through a reactor with base material for microorganisms, whereby simultaneous a biological nitrification and enrichment of the process water with oxygen takes place, characterized in that the process water flows through at least one fluidized bed reactor, whereby no process water is fed back as recirculation water from the outlet of the reactor to the reactors inlet, and that the oxygen is charged into the process water via membranes within the fluidized bed reactor whereby the performance of oxygen charge of the membran system is adjusted in such a manner, that the amount of delivered oxygen is sufficient to nitrify ammonium nitrogen completely and additional to adjust the oxygen concentration within the discharge water of the reactor up to the desired value.

2. Application of the process according to claim 1, characterized in that surplus nitrogen or surplus carbon dioxide is removed out of the water phase by means of withdrawal of a sectional gas stream out of the membran system.

## Revendications

1. Utilisation d'un procédé de traitement de l'eau utilisée dans des installations d'aquaculture, selon lequel l'eau utilisée est amenée à travers un réacteur avec un support pour des microorganismes, une nitrification biologique et une oxygénation de l'eau étant effectuées simultanément, caractérisée en ce que l'eau passe à travers au moins un réacteur à lit fluidisé, l'eau utilisée comme eau de recirculation provenant de la sortie du réacteur n'étant pas ramenée a l'entrée du réacteur, et en ce que l'oxygène est entraîné, par l'intermédiaire de membranes situées dans le réacteur à lit fluidisé, dans l'eau, le débit d'alimentation en oxygène du système de membranes étant réglé de façon que la quantité d'oxygène fournie suffise pour nitrifier totalement l'azote ammonium et en outre pour régler à la valeur souhaitée la teneur en oxygène dans l'eau d'écoulement du réacteur.

2. Utilisation du procédé selon la revendication 1, caractérisée en ce que l'azote surnageant ou le dioxyde de carbone surnageant sont éliminés de la phase aqueuse, par évacuation d'un courant gazeux partiel, du système de membranes.
